# FASCICULE DE BREVET EUROPEEN

(11) **EP 2 819 823 B1**
(45) Date de publication et mention de la délivrance du brevet: **24.02.2016**
(21) Numéro de dépôt: 13709067.6
(22) Date de dépôt: 28.02.2013
(51) Int. Cl.: B29C 43/36, B29C 70/44, B29C 70/54

(54) **PROCÉDÉ ET DISPOSITIF POUR LE COMPACTAGE ET LA CONSOLIDATION D'UN PANNEAU COMPOSITE DE FORTE ÉPAISSEUR À MATRICE THERMOPLASTIQUE**
VERFAHREN UND VORRICHTUNG ZUR VERDICHTUNG UND KONSOLIDIERUNG EINER DICKEN VERBUNDSTOFFPLATTE MIT EINER THERMOPLASTISCHEN MATRIX
PROCESS AND DEVICE FOR THE COMPACTING AND CONSOLIDATION OF A THICK COMPOSITE PANEL HAVING A THERMOPLASTIC MATRIX

(30) Priorité: 29.02.2012 FR 1251876
(43) Date de publication de la demande: 07.01.2015
(73) Titulaire: Daher Aerospace, 41400 Saint Julien De Chedon (FR)
(72) Inventeur: KURTZ, Didier, F-44210 Pornic (FR); VAUDOUR, Julie, F-44118 La Chevroliere (FR)
(74) Mandataire: Ipside
(86) Numéro de dépôt international: PCT/EP2013/054105
(87) Numéro de publication internationale: WO 2013/127965

(56) Documents cités:
- EP-A1- 2 064 050
- EP-A2- 2 193 014
- WO-A1-97/25198
- US-A1- 2010 266 808
- DATABASE WPI Week 199234 Thomson Scientific, London, GB; AN 1992-281916 XP002687281, -& JP 4 194265 A (TAKENAKA KOMUTEN CO) 14 juillet 1992 (1992-07-14)

## Description

L'invention concerne un procédé et un dispositif pour le compactage et la consolidation d'un panneau composite de forte épaisseur à matrice thermoplastique. L'invention est plus particulièrement adaptée à la fabrication d'un panneau thermoplastique utilisé pourdes applications aéronautiques notamment pour la structure d'un aéronef dans des zones susceptibles d'être soumises à des impacts, tels que le panneau, dit de casquette, situé au dessus du cockpit ou encore pour la fabrication de pièces de structure fortement sollicitées, telles que les mâts supportant les moteurs, sans que ces exemples d'application ne soient limitatifs. L'invention concerne tant la fabrication d'un panneau plan que celle d'un panneau présentant une courbure.

Les composites à matrice thermoplastique, plus particulièrement les composites à renfort fibreux continu sous la forme de fibres de carbone dans une matrice constituée de polyétheréthercétone ou PEEK, sont connus pour leur combinaison de caractéristiques mécaniques, de résistance aux impacts et de comportement au feu. Pour des applications structurales exigeantes, telles que les exemples d'application précédents, le taux de renfort dans le composite est supérieur à 50 % et peut atteindre 65 %. Le terme « forte épaisseur » désigne des panneaux dont l'épaisseur est supérieure à 20 mm, c'est à dire comprenant plus de 150 plis de renfort.

Le document EP-B-2 064 050 décrit un procédé et un dispositif pour la fabrication d'un panneau composite à matrice thermoplastique dont l'épaisseur est comprise entre 2 mm et 20 mm. Comme le procédé décrit dans ce document de l'art antérieur, le procédé objet de l'invention est un procédé dit « hors autoclave » n'utilisant que le tirage au vide de l'empilement de plis pour en obtenir le compactage et la consolidation. Ainsi, le procédé objet de l'invention est particulièrement avantageux pour la fabrication d'un panneau de grande dimension dont la matrice est constituée d'un polymère à haut point de fusion tel que le PEEK.

Le procédé de l'art antérieur s'avère peu adapté à la fabrication d'un panneau destiné à une application aéronautique structurale et dont l'épaisseur finie est supérieure à 10 mm, c'est-à-dire que ledit panneau comporte un empilement de plus de 70 plis. En effet, le risque qu'un panneau de cette épaisseur et obtenu par ce procédé de l'art antérieur présente un taux de porosité incompatible avec l'application visée est très significatif, conduisant à des taux de rebut qui augmentent le coût de fabrication de ce panneau.

Le document EP 20064050 décrit un procédé pour la fabrication d'un panneau composite comportant une matrice thermoplastique, d'une épaisseur comprise entre 1 mm et 20 mm.

Le document EP 2193014 décrit un procédé pour réaliser une pièce en matériau composite comprenant un système de drainage des gaz comportant une plaque peforée.

L'invention vise à résoudre les inconvénients de l'art antérieur et concerne à cette fin un dispositif de compactage et de consolidation d'un empilement supérieur à 20 mm, de plis fibreux pré-imprégnés d'un polymère thermoplastique, apte à être placé en étuve, lequel dispositif comporte :
a. un marbre de drapage ;
b. des cales, dites cales de confinement, prenant appui sur le marbre et délimitant le périmètre de l'empilement, lesdites cales comportant des rainures ouvertes débouchant dans le périmètre de l'empilement ;
c. un tissu de verre de garnissage sur la face des cales de confinement délimitant le périmètre de l'empilement ;
d. une tôle de compactage flexible de surface égale à la surface de l'empilement mais apte à s'insérer à l'intérieur du périmètre délimité par les cales de confinement ;
e. des moyens pour envelopper de manière étanche l'empilement de plis, les cales de confinement et la tôle de compactage ;
f. des moyens pour tirer au vide le volume ainsi enveloppé comprenant une pluralité d'orifices dans le marbre, ladite pluralité consistant en des orifices débouchant à l'extérieur du périmètre de l'empilement.

Ainsi, le dispositif objet de l'invention permet d'obtenir un compactage optimum de l'empilement de plis, en drainant directement les gaz compris dans cet empilement par la périphérie de celui-ci. Cette caractéristique est obtenue par les cales de confinement rainurées qui coopèrent avec la tôle de compactage flexible pour, d'une part, maîtriser le volume et l'épaisseur du panneau lors de la fusion du polymère constituant la matrice, et d'autre part, assurer l'uniformité de la pression de compactage sur l'empilement de plis. Le drainage en périphérie est obtenu par la coopération des rainures pratiquées dans les cales et par la position des orifices de tirage au vide situés à l'extérieur du périmètre de l'empilement.

L'invention concerne également un procédé de compactage et de consolidation d'un empilement supérieur à 20 mm, de plis fibreux pré-imprégnés d'un polymère thermoplastique, utilisant un dispositif selon l'invention, lequel procédé comprend les étapes consistant à :
i. draper un empilement de plis pré-imprégnés sur le marbre ;
ii. entourer le périmètre de l'empilement ainsi créé avec les cales de confinement dont la face en contact avec l'empilement est garnie d'un tissu drainant ;
iii. placer la tôle de compactage au sommet de l'empilement
iv. recouvrir la tôle de compactage et les cales de confinement d'un tissu drainant ;
v. emballer le tout dans une bâche à vide étanche ;
vi. placer l'ensemble dans une étuve ;
vii. tirer à un premier niveau de vide correspondant à une première valeur de dépression, le volume contenu entre la bâche à vide et le marbre ;
viii. porter l'ensemble à la température de fusion du polymère constituant la matrice en poursuivant le tirage au vide du volume contenu entre la bâche à vide et le marbre ;
ix. tirer le volume contenu entre la bâche à vide et le marbre à un second niveau de vide, correspondant à une seconde valeur de dépression supérieure à la première.

Ainsi le procédé objet de l'invention tire au vide l'empilement de plis pendant tout le processus de chauffage, et plus particulièrement avant la fusion du polymère thermoplastique. Selon un effet surprenant, la disposition de l'aspiration du dispositif objet de l'invention permet d'obtenir des niveaux de compactage appropriés grâce à un dégazage efficace de l'empilement. Sans être lié par cette explication, il est supposé que les petits défauts d'état de surface des plis pré-imprégnés et non pégueux suffisent à réaliser le dégazage de l'empilement par l'aspiration périphérique au moyen des rainures pratiquées dans les cales de confinement, jusqu'à la fusion du polymère constituant la matrice. L'aspiration périphérique permet de profiter de cet effet plus longtemps qu'une aspiration réalisée essentiellement à travers l'épaisseur de l'empilement comme selon le procédé de l'art antérieur. L'application de deux niveaux de vide, permet de réaliser ce dégazage jusqu'à la température de fusion du polymère thermoplastique constituant la matrice, puis de compacter l'ensemble par la tôle de compactage au deuxième niveau de vide, alors que la résine est à une température suffisante pour réaliser l'imprégnation des fibres du renfort. Cette tôle de compactage ne reposant pas sur les cales et étant flexible, elle produit un appui uniforme sur l'empilement en évitant les appuis localisés susceptibles de générer des essorages, des ondulations de plis et des défauts de compactage.

L'invention est avantageusement mise en oeuvre selon les modes de réalisation exposés ci-après, lesquels sont à considérer individuellement ou selon toute combinaison techniquement opérante.

Avantageusement, les cales de confinement sont sensiblement en forme de coin, l'épaisseur d'une cale entre son sommet et sa surface d'appui sur le marbre étant dégressive depuis la face de la cale délimitant le périmètre de l'empilement, formant un pan incliné, lequel pan incliné est rainuré. Cette caractéristique améliore sensiblement le dégazage de l'empilement par la périphérie et assure également une pression uniforme dans le sens perpendiculaire à l'empilement de la bâche à vide sur la tôle de compactage.

Avantageusement, la face d'appui des cales de confinement sur le marbre est rainurée. Ainsi, l'aspiration périphérique est améliorée dans la partie inférieure de l'empilement, en contact avec le marbre.

Avantageusement, la face des cales de confinement délimitant le périmètre de l'empilement est rainurée. Ainsi, l'aspiration périphérique est améliorée sur toute l'épaisseur de l'empilement.

Avantageusement, les cales de confinement sont en acier. Ainsi, celles-ci disposent de la rigidité suffisante pour contenir le volume de l'empilement lors du compactage et de la consolidation de celui-ci.

Avantageusement, la tôle de compactage est une feuille de titane d'une épaisseur inférieure ou égale à 0,5 mm. Ainsi, la résistance de ce matériau est adaptée pour conserver un comportement élastique à une température correspondant à la température de fusion du polymère constituant la matrice, y compris pour des températures de fusion élevées de l'ordre de 400 °C, tout en conservant la flexibilité requise compte tenu de la faible épaisseur de la tôle et du module élastique du titane.

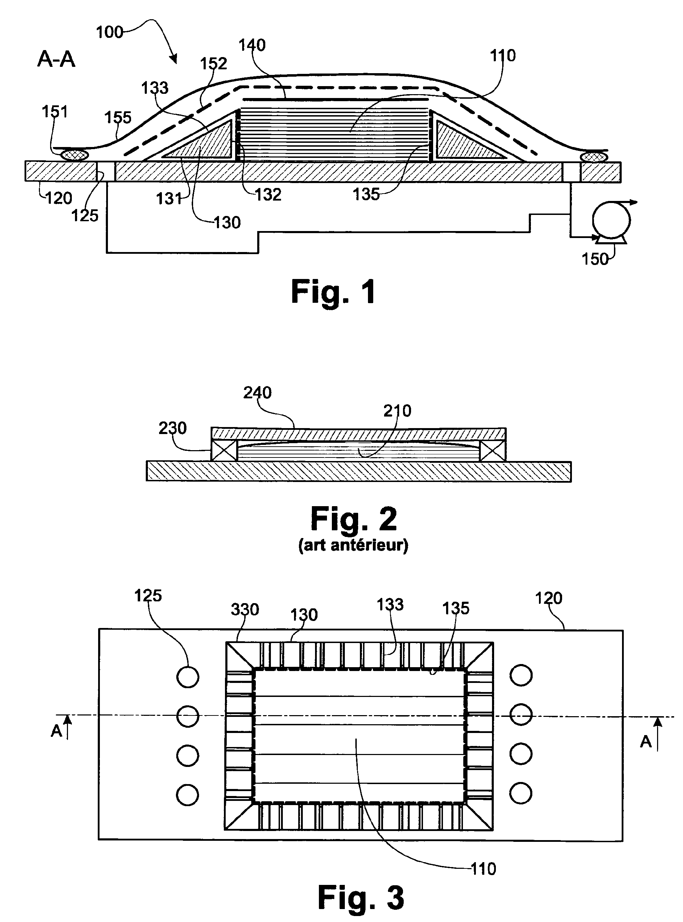

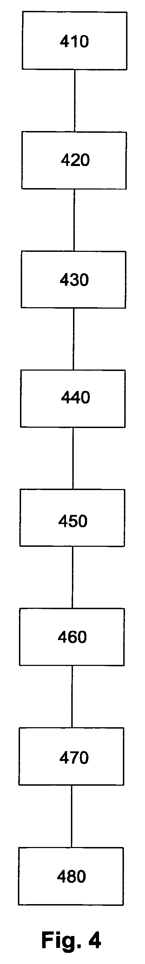

L'invention est exposée ci-après selon ses modes de réalisation préférés, nullement limitatifs, et en référence aux figures 1 et 4, dans lesquelles :
- la figure 1 est une vue schématique en coupe selon un plan de coupe défini figure 3, d'un exemple de réalisation du dispositif objet de l'invention ;
- la figure 2, relative à l'art antérieur est une vue schématique en coupe d'un dispositif de compactage consolidation porté à la température de fusion du polymère thermoplastique constituant la matrice du composite ;
- la figure 3 est une vue schématique de dessus d'un exemple de réalisation du dispositif objet de l'invention ;
- et la figure 4 est un organigramme du procédé objet de l'invention.

Figure 1, selon un exemple de réalisation, le dispositif (100) objet de l'invention est adapté au compactage et à la consolidation d'un empilement (110) de plis fibreux pré-imprégnés d'un polymère thermoplastique. Lesdits plis fibreux sont, selon un exemple de réalisation adaptés à la fabrication de panneaux destinés à des applications aéronautiques, des nappes unidirectionnelles de fibres de carbone filmées par un polymère thermoplastique tel que du PEEK. Alternativement, le dispositif (100) objet de l'invention est adapté à la consolidation de plis constitués de tissus, poudrés d'un polymère thermoplastique ou comprenant des fibres thermoplastiques co-mêlées. Le dispositif objet de l'invention est adapté au compactage et à la consolidation d'un empilement (110) comprenant plus de 150 plis, soit un panneau dont l'épaisseur finie est supérieure à 20 mm pour un taux de renforts de l'ordre de 65 %.

L'empilement (110) est drapé directement sur la surface d'un marbre (120) reproduisant la forme du panneau à obtenir. Le drapage est manuel ou automatisé. Les plis pré-imprégnés n'étant pas pégueux, l'empilement est stabilisé, selon un exemple de réalisation, en collant le premier pli sur la surface du marbre (120) par des bandes adhésives, les plis successifs de l'empilement étant liés uns aux autres et à ce premier pli par des soudures ponctuelles, sous forme de points ou de lignes de soudage. L'empilement étant drapé, celui-ci est enserré dans des cales de confinement (130), délimitant la périphérie dudit empilement (110) et fixées au marbre (120), par exemple, au moyen de bandes adhésives résistant à haute température, ou encore par obstacle au moyen de pions. Selon un exemple de réalisation, lesdites cales (130) de confinement sont sensiblement en forme coin, la partie la plus haute étant placée du côté de l'empilement (110). Une telle cale (130) de confinement comporte avantageusement une pluralité de rainures (131, 132, 133) ouvertes et débouchant les unes dans les autres sur plusieurs faces de ladite cale (130) notamment, sur la face d'appui de la cale sur le marbre, sur la face de la cale délimitant le périmètre de l'empilement, et sur la face supérieure en pan inclinée de cette cale. Le marbre (120) et les cales de confinement (130) sont avantageusement constitués d'acier, préférentiellement d'un acier, dit d'outillage, comprenant 0,4 % de carbone, 2 % de chrome, du manganèse et du molybdène, d'une résistance en traction supérieure ou égale à 1000 M Pa. La face des cales de confinement (130) délimitant le périmètre de l'empilement (120) est séparée dudit empilement par un tissu de drainage (135) constitué d'un tissu de verre fin. Le marbre (120) est percé d'une pluralité d'orifices (125) d'aspiration, connectés par un circuit approprié à une pompe (150) à vide. Ces orifices (150) débouchent tous à l'extérieur de l'empilement, de sorte que la surface du marbre (120) sur laquelle est réalisé le drapage de l'empilement est lisse. Une tôle de compactage (140) est placée au sommet de l'empilement. Les dimensions de cette tôle (140) de compactage sont telles, qu'elle recouvre l'empilement (110) sans reposer sur le sommet des cales (130) de confinement. La tôle de compactage est flexible. Cette combinaison de caractéristiques lui permet d'appuyer de manière uniforme sur toute la surface de l'empilement.

En effet, la figure 2 relative à l'art antérieur, représente de manière amplifiée l'action d'une tôle de compactage (240) selon l'art antérieur, reposant sur les cales de confinement (230) durant la consolidation d'un empilement (210) de plis pour la constitution d'un panneau composite. La demanderesse a mis en évidence que, du fait des effets de bord inévitables, lorsque le polymère thermoplastique constituant la matrice est en fusion, le sommet de l'empilement prend une forme sensiblement convexe. La tôle de compactage (240), rigide selon l'art antérieur, est en appui sur les cales de confinement (230) lesquelles sont légèrement moins hautes que l'épaisseur finale de la pièce. Ainsi, la tôle de compactage, bien que maintenant le volume, n'applique pas une pression uniforme sur ledit empilement (210) produisant ainsi des défauts. De plus, lorsque la consolidation a lieu à haute température, par exemple 400 °C, les caractéristiques mécaniques du matériau constituant la tôle de compactage chutent, de sorte que la dite tôle (240) tend également a se déformer mais de manière concave, amplifiant ainsi le phénomène d'appui local.

En revenant à la figure 1, un tissu de drainage (152) par exemple sous la forme d'un tissu de verre grossier est placé au-dessus de la tôle de compactage, lequel tissu (152) s'étend jusqu'à la surface du marbre (120). Une vessie (155) ou bâche à vide associée à des moyens d'étanchéité (151), les deux (151, 155) étant adaptés à la température d'utilisation du dispositif, créent un volume étanche, dans lequel les moyens d'aspiration (125, 151) peuvent créer le vide.

Figure 3, selon une vue de dessus, les cales de confinement comprennent des cales droites (130) et des cales d'angle (330) toutes rainurées, de sorte à entourer le périmètre de l'empilement (110), le tissu de drainage (135) au contact de l'empilement (110) se prolongeant également sur tout le périmètre.

Figure 4, selon un exemple de réalisation, le procédé objet de l'invention comprend une première étape de drapage (410) consistant à réaliser l'empilement sur le marbre. La face du marbre sur laquelle est réalisé empilement est avantageusement enduite d'un agent démoulant à base aqueuse de type CIREX® SI 041 WB distribué par SICOMIN 31 avenue de la Lardière 13 161 Châteauneuf les Martigues FRANCE. Au cours d'une étape d'installation (420) les cales de confinement et le tissu de drainage sont installés le long du périmètre de l'empilement. Au cours d'une étape d'emballage (430), la tôle de compactage, le tissu de drainage, la bâche à vide et les moyens d'étanchéité sont installés, le dispositif est alors connecté à la pompe à vide. Avantageuement, la face de la tôle de compactage au contact de l'empilement est également enduite d'un agent démoulant de type CIREX®. Au cours d'une étape (440) d'enfournement, le dispositif est placé en étuve. Au cours d'une étape de dégazage (450) la température de l'étuve est portée jusqu'à la température de fusion de du polymère thermoplastique en réalisant dans la chambre délimitée par la bâche à vide un premier niveau de vide en portant la pression de la dite chambre à une valeur comprise entre 10 et 100 Pa.

Selon une étape de compactage (460) la température de l'étuve est montée jusqu'à une température supérieure à la température de fusion du polymère, suffisante pour obtenir l'imprégnation des renforts fibreux par ledit polymère, par exemple, une température de 400 °C pour le PEEK. En même temps le vide dans la chambre délimitée par la bâche à vide est poussé pour descendre la pression dans cette chambre à une valeur comprise entre 0,1 et 0,01 Pa. La viscosité du polymère thermoplastique à l'état fondu l'empêche de franchir le tissu de drainage entourant le périmètre de l'empilement et d'être aspiré par la pompe. Ainsi, l'effet de l'accroissement du vide est surtout d'augmenter la pression de la tôle de compactage sur l'empilement, ce qui réalise le compactage de l'ensemble. Au cours d'une étape de refroidissement (470), le chauffage de l'étuve et coupé, le vide étant maintenu jusqu'à ce que la température dans l'empilement atteigne la température de transition vitreuse du polymère constituant la matrice du composite. Finalement l'ensemble est démoulé au cours d'une étape de démoulage (480). Si nécessaire, le panneau ainsi formé fait l'objet d'opérations de parachèvement, notamment de détourage, ou d'adjonction par soudure de raidisseurs à sa surface.

La description ci-avant et les exemples de réalisation montrent que l'invention atteint les objectifs visés, en particulier, en séparant les phases de dégazage (450) et de compactage (460), par l'utilisation d'un dégazage latéral et d'une tôle de compactage (140) flexible, le dispositif et le procédé objet de l'invention permettent la réalisation d'un panneau thermoplastique de forte épaisseur, lequel panneau peut être avantageusement utilisé, notamment comme panneau de fuselage d'un aéronef dans une zone soumise à des risques d'impact, notamment la casquette dudit aéronef, afin de réduire la masse et la consommation en carburant de cet aéronef.

## Revendications

1. Dispositif (100) de compactage et de consolidation d'un empilement (110) supérieur à 20 mm, de plis fibreux pré-imprégnés d'un polymère thermoplastique, apte à être placé en étuve, **caractérisé en ce qu'**il comporte :
a. un marbre (120) de drapage ;
b. des cales (130,330), dites cales de confinement, prenant appui sur le marbre (120) et délimitant le périmètre de l'empilement, lesdites cales (130) comportant des rainures (131, 132, 133) ouvertes débouchant dans le périmètre de l'empilement ;
c. un tissu de verre (135) de garnissage sur la face des cales (130) de confinement délimitant le périmètre de l'empilement (110) ;
d. une tôle (140) de compactage flexible de surface égale à la surface de l'empilement (110) mais apte à s'insérer à l'intérieur du périmètre délimité par les cales de confinement (130, 330) ;
e. des moyens (151, 152, 155) pour envelopper de manière étanche l'empilement de plis, les cales de confinement et la tôle de compactage ;
f. des moyens (150, 125) pour tirer au vide le volume ainsi enveloppé comprenant une pluralité d'orifices (125) dans le marbre (120), ladite pluralité consistant en des orifices débouchant à l'extérieur du périmètre de l'empilement.

2. Procédé de compactage et de consolidation d'un empilement (110) supérieur à 20 mm, de plis fibreux pré-imprégnés d'un polymère thermoplastique, utilisant un dispositif (100) selon la revendication 1, **caractérisé en ce qu'**il comprend les étapes consistant à :
i. draper (410) un empilement de plis pré-imprégnés sur le marbre ;
ii. entourer (420) le périmètre de l'empilement ainsi créé avec les cales de confinement (130, 330) dont la face en contact avec l'empilement est garnie d'un tissu drainant (135) ;
iii. placer la tôle de compactage (140) au sommet de l'empilement (110) ;
iv. recouvrir (430) la tôle de compactage et les cales de confinement d'un tissu drainant ;
v. emballer (430) le tout dans une bâche (155) à vide étanche ;
vi. placer (440) l'ensemble dans une étuve ;
vii. tirer (450) à un premier niveau de vide correspondant à une première valeur de dépression, le volume contenu entre la bâche (155) à vide et le marbre (120) ;
viii. porter (450) l'ensemble à la température de fusion du polymère constituant la matrice en poursuivant le tirage au vide du volume contenu entre la bâche (155) à vide et le marbre (120) ;
ix. tirer (460) le volume contenu entre la bâche (155) à vide et le marbre (120) à un second niveau de vide correspondant à une seconde valeur de dépression supérieure à la première.

3. Dispositif selon la revendication 1, **caractérisé en ce que** les cales de confinement (130, 330) sont sensiblement en forme de coin, l'épaisseur d'une cale entre son somment et sa surface d'appui sur le marbre étant dégressive depuis la face de la cale délimitant le périmètre de l'empilement, formant un pan incliné, lequel pan incliné est rainuré (133).

4. Dispositif selon la revendication 1, **caractérisé en ce que** la face d'appui des cales de confinement (130, 330) sur le marbre (120) est rainurée (131).

5. Dispositif selon la revendication 1 **caractérisé en ce que** la face des cales (130) de confinement délimitant le périmètre de l'empilement est rainurée (132).

6. Dispositif selon les revendications 3 à 5, **caractérisé en ce que** les rainures (131, 132, 133) sur les 3 faces des cales (130) de confinement débouchent les unes dans les autres.

7. Dispositif selon la revendication 1, **caractérisé en ce que** les cales de confinement (130, 330) sont en acier.

8. Dispositif selon la revendication 1, caractérisé en la tôle (140) de compactage est une feuille de titane d'une épaisseur inférieure ou égale à 0,5 mm.

## Patentansprüche

1. Vorrichtung (100) zum Verdichten und Verfestigen eines Stapels (110) vorimprägnierter Faserlagen eines thermoplastischen Polymers, die in einer Trockenkammer angebracht werden kann, **dadurch gekennzeichnet, dass** sie umfasst:
a. eine Schrumpfplatte (120);
b. sogenannte Einschlussklötze (130, 330), die auf der Platte (120) aufliegen und den Umriss des Stapels abgrenzen, wobei diese Klötze (130) offene Rillen (131, 132, 133) aufweisen, die in den Umriss des Stapels münden;
c. ein Glasgewebe (135) zum Verkleiden der Seite der Einschlussklötze (130), die den Umriss des Stapels (110) abgrenzen;
d. ein biegsames Verdichtungsblech (140) mit einer gleich großen Fläche wie die Stapelfläche (110), das jedoch in den von den Einschlussklötzen (130, 330) abgegrenzten Umriss eingefügt werden kann;
e. Mittel (151, 152, 155) zum abgedichteten Einhüllen des Lagenstapels, der Einschlussklötze und des Verdichtungsblechs;
f. Mittel (150, 125), um im derart eingehüllten Volumen ein Vakuum zu schaffen, welche eine Vielzahl von Öffnungen (125) in der Platte (120) umfassen, wobei diese Vielzahl aus Öffnungen besteht, die in die Außenseite des Umrisses des Stapels münden.

2. Verdichtungs- und Verfestigungsverfahren eines Stapels (110) vorimprägnierter Faserlagen eines thermoplastischen Polymers, bei dem eine Vorrichtung (100) nach Anspruch 1 zum Einsatz kommt, **dadurch gekennzeichnet, dass** es folgende Arbeitsschritte umfasst:
i. Aufrichten (410) eines Stapels vorimprägnierter Lagen auf der Platte;
ii. den Umriss des so erzeugten Stapels mit Einschlussklötzen (130,330) umranden (420), deren Kontaktfläche mit dem Stapel mit einem drainierenden Gewebe (135) beschichtet ist;
iii. Anordnen des Verdichtungsblechs (140) auf der Spitze des Stapels (110);
iv. Abdecken (430) des Verdichtungsbleches und der Einschlussklötze mit einem drainierenden Gewebe;
v. Einpacken (430) des Ganzen in eine dichte, für ein Vakuum geeignete Plane (155);
vi. Anbringen (440) der Einheit in einer Trockenkammer;
vii. im Volumen zwischen der Plane (155) und der Platte (120) ein erstes Vakuumlevel (450) herstellen, das einem ersten Unterdruckwert entspricht;
viii. die Einheit auf die Schmelztemperatur des Polymers bringen (450), welches die Matrize bildet und gleichzeitig das Vakuum des Volumens zwischen der Plane (155) und der Platte (120) verstärken;
ix. im Volumen zwischen der Plane (155) und der Platte (120) ein zweites Vakuumlevel (460) herstellen, das einem zweiten Unterdruckwert entpricht, der höher ist als der erste.

3. Vorrichtung nach Anspruch 1, **dadurch gekennzeichnet, dass** die Einschlussklötze (130, 330) im Wesentlichen keilförmig sind, wobei die Stärke eines Klotzes zwischen seiner Spitze und seiner Auflagefläche auf der Platte von der Seite des Klotzes aus, die den Umriss des Stapels abgrenzt, abnehmend ist und so eine geneigte Seitenfläche bildet, die gerillt (133) ist.

4. Vorrichtung nach Anspruch 1, **dadurch gekennzeichnet, dass** die Auflagefläche der Einschlussklötze (130, 330) auf der Platte (120) gerillt (131) ist.

5. Vorrichtung nach Anspruch 1, **dadurch gekennzeichnet, dass** die Seite der Einschlussklötze (130), die den Umriss des Stapels abgrenzt, gerillt (132) ist.

6. Vorrichtung nach den Ansprüchen 3 bis 5, **dadurch gekennzeichnet, dass** die Rillen (131, 132, 133) auf den 3 Seiten der Einschlussklötze (130) ineinander münden.

7. Vorrichtung nach Anspruch 1, **dadurch gekennzeichnet, dass** die Einschlussklötze (130, 330) aus Stahl sind.

8. Vorrichtung nach Anspruch 1, **dadurch gekennzeichnet, dass** das Verdichtungsblech (140) eine Titanfolie ist, deren Stärke kleiner gleich 0,5 mm ist.

## Claims

1. A device (100) for compacting and consolidating a stack (110) of fibrous plies pre-impregnated with thermoplastic polymer, suitable for being placed in a stove, **characterized in that** it comprises:
a. a laying up board (120);
b. blocks (130, 330), known as containment blocks, that are supported by the board (120) and that demarcate the perimeter of the stack, wherein said blocks (130) comprise grooves (131, 132, 133) that open into the perimeter of the stack;
c. covering glass fabric (135) on the side of the containment blocks (130) demarcating the perimeter of the stack (110);
d. a flexible compacting plate (140) with an area equal to that of the stack (110), but suitable for insertion inside the perimeter demarcated by the containment blocks (130, 330);
e. means (151, 152, 155) to wrap in a sealed manner the stack of plies, the containment blocks and the compacting plate;
f. means (150, 125) to apply a vacuum to the volume wrapped **in that** manner comprising a plurality of holes (125) in the board (120), wherein said plurality comprises holes that open outside the perimeter of the stack.

2. A method for compacting and consolidating a stack (110) of fibrous plies pre-impregnated with thermoplastic polymer, using a device (100) according to claim 1, **characterized in that** it comprises the steps of:
i. laying up (410) a stack of pre-impregnated plies on the board;
ii. surrounding (420) the perimeter of the stack thus created with the containment blocks (130, 330), with the sides of the blocks in contact with the stack covered with draining fabric (135);
iii. placing the compacting plate (140) at the top of the stack (110);
iv. covering (430) the compacting plate and containment blocks with draining fabric;
v. wrapping (430) the whole in a sealed vacuum cover (155);
vi. placing (440) the whole in a stove;
vii. applying (450) a first vacuum corresponding to a first negative pressure value to the volume contained between the vacuum cover (155) and the board (120);
viii. raising (450) the temperature of the whole to the melting temperature of the polymer making up the matrix while continuing to apply a vacuum to the volume contained between the vacuum cover (155) and the board (120);
ix. applying (460) a second level of vacuum to the volume contained between the vacuum cover (155) and the board (120), corresponding to a second negative pressure value greater than the first one.

3. A device according to claim 1, **characterized in that** the containment blocks (130, 330) are substantially wedge shaped, with the thickness of a block between its top and its support surface on the board reducing from the side of the block demarcating the perimeter of the stack, forming an inclined face, which inclined face is grooved (133).

4. A device according to claim 1, **characterized in that** the support faces of the containment blocks (130, 330) on the board (120) are grooved (131).

5. A device according to claim 1, **characterized in that** the faces of the containment blocks (130) demarcating the perimeter of the stack are grooved (132).

6. A device according to claims 3 to 5, **characterized in that** the grooves (131, 132, 133) on the 3 sides of the containment blocks (130) open out into each other.

7. A device according to claim 1, **characterized in that** the containment blocks (130, 330) are in steel.

8. A device according to claim 1, **characterized in that** the compacting plate (140) is a sheet of titanium with thickness less than or equal to 0.5 mm.
